# EUROPEAN PATENT APPLICATION

(11) **EP 2 336 911 A1**
(43) Date of publication of application: **22.06.2011**
(21) Application number: 10192120.3
(22) Date of filing: 22.11.2010
(51) Int. Cl.: G06F 17/30

(54) **Efficient change tracking of transcoded copies**

(30) Priority: 23.11.2009 US 263797 P
(71) Applicant: Barnes, Jordan Douglas, Kanata ON K2K 2A5 (CA); Washburn, Michael Gordon, Kanata ON K2K 2A5 (CA)
(72) Inventor: Barnes, Jordan Douglas, Kanata ON K2K 2A5 (CA); Washburn, Michael Gordon, Kanata ON K2K 2A5 (CA)
(74) Representative: Roberts, Gwilym Vaughan

(57) **Abstract**

A method for efficient change tracking of transcoded copies may include receiving a selection of one or more media items to synchronize with a mobile electronic device. The selection may include one or more quality preferences for syncing the one or more media items. Sync metadata may be accessed that is associated with media items stored on the mobile electronic device. A set of media items may be generated to copy to the mobile electronic device based on the selection, one or more quality preferences, and sync metadata. Also the set of media items may be copied to the mobile electronic device.

## Description

### CROSS -REFERENCE TO RELATED APPLICATION

This non-provisional patent application claims the benefit of the filing date of U.S. Provisional Patent Application Serial No. 61/263,797; filed November 23, 2009; and entitled, "EFFICIENT CHANGE TRACKING OF TRANSCODED COPIES," the contents of which is incorporated by reference herein.

### BACKGROUND

Syncing software allows a user to sync a mobile electronic device with selected media items on a personal computer. Mobile electronic devices may include files that have been copied from an external source, such as a user's personal computer.

### BRIEF DESCRIPTION OF THE DRAWINGS

Some embodiments are illustrated by way of example and not limitation in the figures of the accompanying drawings in which:

FIG. 1 illustrates a system including a personal computer and a mobile electronic device, according to an example embodiment;

FIG. 2 illustrates a mobile electronic device and a computing device, according to an example embodiment;

FIG. 3 illustrates a sync index file, according to an example embodiment;

FIG.4 illustrates a sync metadata file, according to an example embodiment;

FIG. 5 illustrates a flowchart diagram , according to an example embodiment; and

FIG. 6 illustrates a computer system, according to an example embodiment.

### DETAILED DESCRIPTION

The following detailed description includes references to the accompanying drawings, which form a part of the detailed description. The drawings show, by way of illustration, specific embodiments in which the embodiments may be practiced. These embodiments, which are also referred to herein as "examples," are illustrated in enough detail to enable those skilled in the art to practice them. The embodiments may be combined, other embodiments may be utilized, or structural, logical, and electrical changes may be made without departing from the scope of the present disclosure. In this document, the terms "a" or "an" are used, as is common in patent documents, to include one or more than one.

In an example embodiment, a user is in control of a mobile electronic device (MED). Mobile electronic devices include, but are not limited to, mobile telephones, portable computers, PDAs, and other devices that may be conveniently carried by a user and sometimes provide wireless communication. Mobile telephones include wireless communication devices that have generally been referred to as cell phones. Mobile telephones may include a wide range of communication devices from portable phones with limited functionality beyond voice communication to portable phones capable of providing functionality of a personal computer (e,g., internet connectivity, web browsing, document editing). Higher functioning phones that include functions similar to a personal computer may be referred to as smart phones.

Syncing media items from a computer to a mobile electronic device presents a number of challenges. For example, suppose a user wishes to sync one hundred media items from a computer to the MED. If no checking is done, the computer might unnecessarily copy one or more of the media items (e.g., if the MED already has some of the files stored). An additional problem arises in tracking if a media item has been changed since it was last synced to the MED. A further challenge is tracking the format changes and quality preferences that have been made to media items stored on the MED. For example, not all MEDs have the same format compatibilities. Thus, if the user wishes to copy a media item in an incompatible format to an MED, the media item should be transcoded. Still yet another challenge arises when a user syncs media items with a computer that has not seen the MED. Thus, if a desktop application is the only location in which changes are tracked, information may lost if the desktop application is erased or if a user wishes to sync items with a new computer. What is needed is a way to efficiently sync media items to a MED while also tracking format and quality preferences of media items stored on the MED. The following disclosure illustrates a solution to these problems through the use of media sync data that is stored on the MED that may be accessed by a desktop application in order to reduce the amount of computations and time necessary to complete a synchronization.

In an example embodiment, the MED stores one or more media items in one or more file formats. Each form of media may be referred to as a media item or media file. Media items may include content in any media format. Some examples of content may include, but are not limited to, audio files, video files, image files, and multimedia files. More specific examples include, but are not limited to, picture, music, movies, music videos, television shows, interactive applications, audiobooks, podcasts, game, and presentations. Audio file formats may include, but are not limited to, MP3, AIFF, WAV, MPEG-4, AAC, and Apple Lossless. Other example file formats for media items include, but are not limited to, files having extensions doc, dot, wpd, txt, xls, pdf, ppt, jpg, jpeg, png, bmp, gif, html, htm, zip, tif, tiff, and wmf.

The media items may be stored on a MED and operated on by an associated playing device (player) on the MED that provides an output that may be presented as communication, information, entertainment, other presentations, or combinations thereof for the user of the player. In an embodiment, the MED may have audio, video, playlists, and/or picture files stored in internal memory storage on the MED and further audio, video, and picture files may be stored on an external card (SD card) that is capable of being inserted into the MED. For example, a music file that is stored on the MED may be played back using an audio playback application.

Additionally, a user may possess a computing device, such as a personal computer, with additional media items. A personal computer (PC), as is generally known, herein refers to computing devices having an operating system (OS) so use of the personal computer may be conducted by individuals having little or no knowledge of the basics of the underlying hardware and software of the computing device. Portable computers may include portable personal computers. An example of a portable PC is a laptop computer or notebook computer that has a display screen, keyboard, underlying hardware and software, and a display pointing device that are all integrated in a housing that may easily be carried by an individual. Some personal digital assistants (PDAs) may be viewed as a type of portable computer. In various embodiments, a PC may include instrumentality for managing media content and instrumentality to operate as a wireless server. A wireless server is a server configuration that communicates with an entity over a channel established by the entities in a wireless network. Other devices, such as mobile wireless communication devices, may be implemented to manage media content.

In an embodiment, a media syncing application generates commands between the personal computer and MED to sync media items between the two devices. In various embodiments, the user selects, via a user interface of the media syncing application, the media items the user wishes to have on her MED.

In order to function efficiently, one or more files are created, stored, and updated on the MED to facilitate syncing. In an embodiment, one or more database files are stored on the MED. The one or more database files include an index file and data file. The index file includes references to the media items stored on the MED and where in the data file the media items can be found. Additional metadata concerning the media items are stored in the data file. In addition to the database files, a sync index file is maintained on the MED that includes data related to what is stored on the MED and its syncing status.

In various embodiments an analysis is completed on user selected media items to predict the amount of space the media items will take up on an MED after sync. When selecting media items, a user may be alerted if the analysis indicates that not all of the media items will fit on the MED. The analysis may use data included in the database files and sync index files to predict the amount of space that will be used on the MED after syncing is complete.

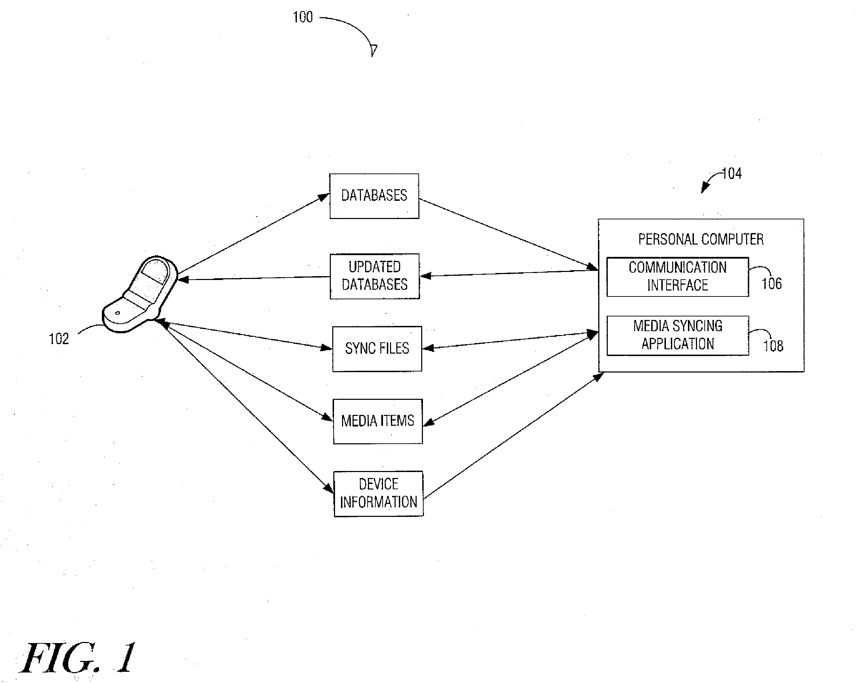

FIG. 1 illustrates an example system 100 that may be used to sync media items between a MED and a personal computer. Illustrated is mobile electronic device 102, personal computer 104, and communications interface 106. Further illustrated, are examples of data that may be transferred between MED 102 and personal computer 104 via communications interface 106. For example, some of the illustrated data includes databases, updated databases, a sync index file, device information, and media items.

In various embodiments, a user connects the MED to a personal computer using a physical connection (e.g., a USB connection). In various embodiments the connection is made using a wireless protocol such as Bluetooth or 802.11 a/b/g/n. Upon connecting the MED to the personal computer, media syncing application 108 is executed on the personal computer. In an embodiment, the media syncing application is executed automatically when the personal computer detects the MED is connected. In further embodiments, the media syncing application is launched manually by the user.

In various embodiments, the launched media syncing application is presented on a display device of the personal computer. The media syncing application may display media items that are currently stored on the MED together with media items that are stored on the personal computer. In an embodiment, the media items stored on both devices are presented in a unified user interface with check boxes that indicate if the media item is currently stored on MED. The media syncing application may determine which media items are currently stored on the MED by examining a sync index file. Additionally, if the media item is a picture file, an option may be presented to the user to allow the picture to be resized/compressed for his or her MED.

In an embodiment, the media syncing application is configured to accept user inputs (e.g., via a mouse, trackpad, touch screen display, or keyboard) that activate one or more of the check boxes presented in the media syncing application. A synchronization set is generated based, in part, on the selected media items. The synchronization set may include a greater or lesser number of media items than were initially presented to the user. For example, a user may decide to add some media items to the MED and remove other media items.

In an embodiment, the media syncing application generates commands that are executed on the personal computer and MED to transfer the media items included in the synchronization set. In various embodiments, the commands are generated, in part, based on what type of the device the MED is, what media items are already stored on the MED, whether or not the media items need to be resized, what quality the media items are, and whether or not the media items need to be compressed.

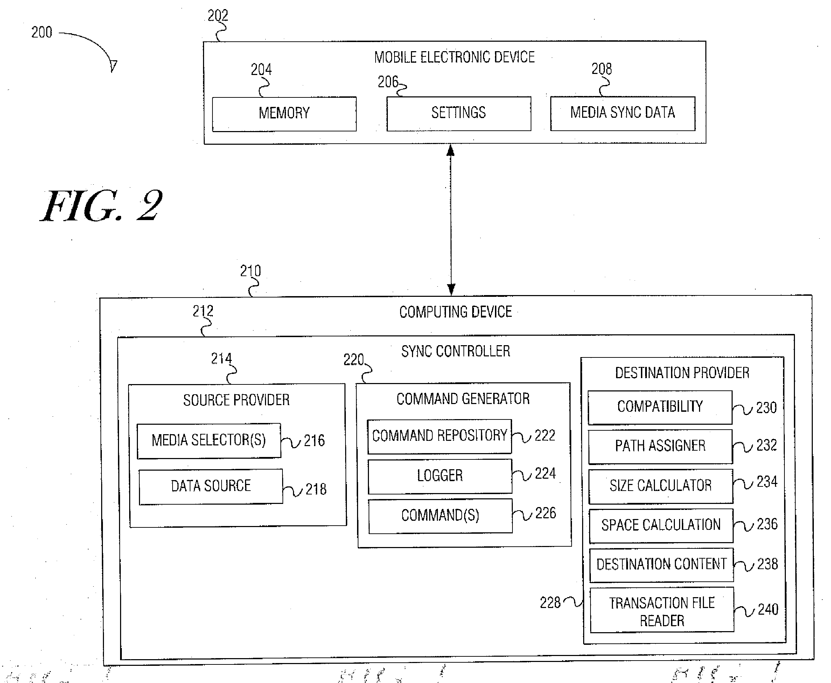

FIG. 2 illustrates a system 200 with additional components that may be part of a mobile electronic device and a computing device. Illustrated is an example mobile electronic device 202 with memory 204, settings 206, and media sync data 208. Further illustrated is computing device 210. Computing device 210 includes sync controller 212, which comprises source provider 214, a command generator 220, and destination provider 228. Source provider 214 comprises one or more media selectors 216 and data sources 218. Command generator 220 comprises command repository 222, logger 224, and one or more commands 226. Destination provider 228 may comprise additional components such as computability 230, path assigner 232, size calculator 234, space calculation 236, destination content 238, and transaction file reader 240.

System 200 may be used to complete a synchronization between a computing device and mobile electronic device. For example, media syncing application 108 may utilize one or more of the components illustrated in system 200 to transfer information between a MED and computing device.

In an example embodiment, source provider 214 determines the type of media item included in a sync session. For example, source provider 214 may identify what selectors 216 are needed. In an example embodiment, a selector provides an interface to one or more media players on the computing device (e.g., an iTunes selector, a Windows Media Player selector). Data sources 218 may provide the actual media items associated with one or more media selectors. As an example, music files associated with a media selector may be presented on a user interface of the media syncing application. Upon a user selecting one or more of the music files, source provider 214 may interface with the responsible player (e.g., a music playing application) to retrieve the audio file.

In an example embodiment, destination provider 228 is similar to source provider 214 except that destination provider facilitates operations needed to be completed with respect to the ultimate destination (e.g., a mobile electronic device). Compatibility 230 may operate to provide information and/or conduct actions to reconcile compatibility such as with different versions of hardware and/or software on mobile electronic device 202. Path assigner 232 may operate as a component that calculates a unique destination path of a to-be-copied media item. Path assigner 232 may take name collisions associated with different media items and OS path limits into consideration. Size calculator 234 may operate as a component that calculates a future file size of a media item on a specified destination device 202. Size calculator 234 may take into account compression (e.g., scaling of images) and disk differences (e,g., physical cluster size of disk). Additionally, size calculator aids in projecting these estimates on a progress bar displayed by the user interface of media syncing application 108. Space calculator 236 may operate as to provide input as to an amount of space available for syncing on a mobile electronic device. Transaction file reader 240 may operate to provide a transaction file of what was transacted as part of sync to a specific destination device 202 in a previous sync operation. Transaction file reader 240 may be used to determine a delta to be copied as part of a next sync operation to the specific destination device 202. Destination content may operate to provide an identification of what media content already resides on destination device 202 as part of the last sync with the specified destination device 202.

In an example embodiment, command repository 222, logger 224, and commands 226 are utilized to carry out the synchronization. In an embodiment, command repository 222 holds commands to be executed at various stages during the sync. As an example, a cleanup stage may require deletion of non-essential and temporary files, a copy stage may require copying of data and metadata (e.g., album artwork). Logger is a component that may log the sync activities and usage statistics for diagnostics purposes and beta statistics. Commands 226 may be the series of commands from the command repository that need to be executed in order for the synchronization to occur.

MEDIA SYNC DATA

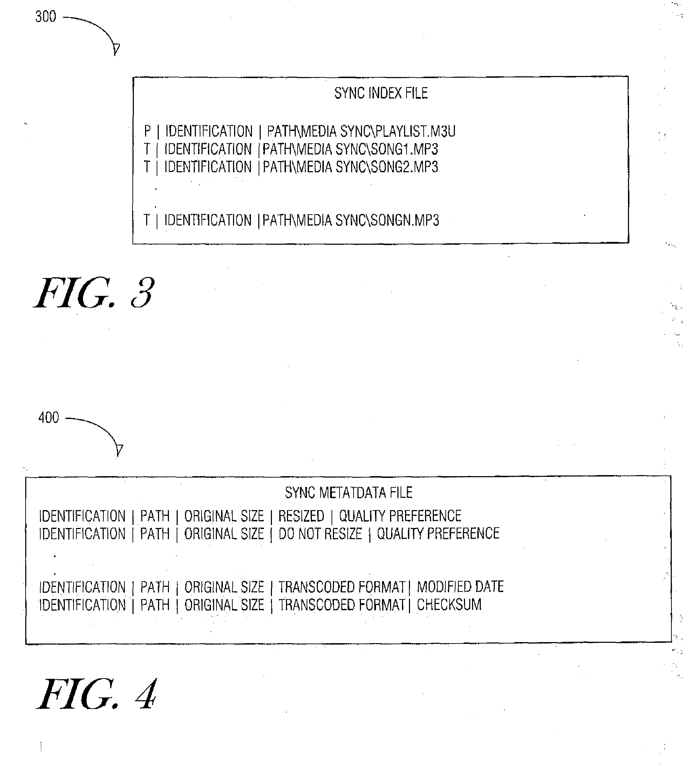

In various embodiments, an effort is made to minimize the amount of time/computations needed to complete a synchronization. Sync data may be stored on a mobile electronic device that keeps a record of what is on the device as well as additional data that may be used by a media syncing application to reduce unnecessary copying and compression. FIGS. 3 and 4 illustrate example files that may be stored on a mobile electronic device (e.g., media sync data 208). While the files have different names, the data included in each may be included in the other (e.g., quality preference data from a sync metadata file may be included in a sync index file). Additionally, there may be more than one sync file. For example, there may be a sync metadata file for video files and a separate sync metadata file for audio files.

FIG. 3 illustrates an example sync index file 300. In an embodiment, a sync index file is a file that includes one or more pipe delineated media items entries. In further embodiments, other characters may be used for delineation and/or a database may be used to store the information. As illustrated in FIG. 3, the sync index file contains basic information about the files on the mobile electronic device. The first entry has a 'P' indicating it to be a playlist while the remaining entries have a 'T' indicating the media item is a track. An identification of each media item is also stored in the sync index file. Further illustrated is the path of the media item. A media sync index file, such as the one illustrated in FIG. 3, may be used to perform a check to see if a file is already on the mobile electronic device. If a user selects a media items on his personal computer, the personal computer may retrieve the sync index file and perform a lookup to see if the file already exists in the sync index file. If the media item does not exist in the sync index file, it may safely be added to the synchronization set to be copied to the mobile electronic device.

FIG. 4 illustrates a sync metadata file. A sync metadata file may include a more detailed look at the media items stored on the mobile electronic device. As shown, entries in the sync metadata file may include metadata about a media item. This metadata may include, but is not limited to, the original file size of a media item, the compressed size of a media item, whether or not a media syncing application has determined that the compressed size of the media item is larger than the original size, a quality preference of a user when the media item was synced to the mobile electronic device, the original format of the media item, the transcoded format of the media item, the modified date of the media item, and a checksum of the media item. This data may be utilized during the syncing process to minimize the amount of commands executed on the computing device.

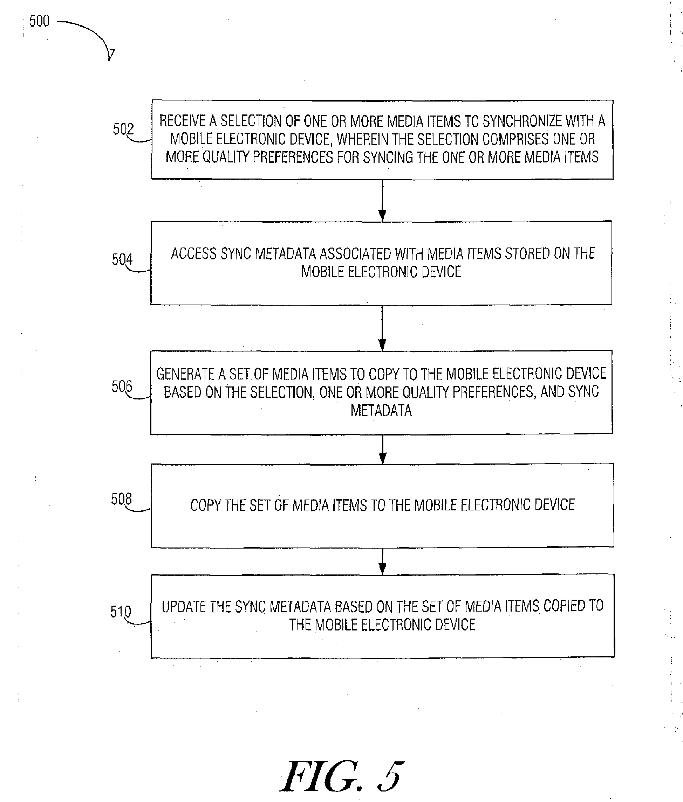

FIG. 5 illustrates an example method utilizing the media sync data during a synchronization. At block 502, in an example embodiment, a selection of one or more media items to synchronize with a mobile electronic device is received. For example, a user may use an input device in conjunction with the media syncing application to select one or more media items. Some of these media items may already be stored on the mobile electronic device and some may currently only be stored on the computing device running the media syncing application or vice-versa.

In various embodiments, indicia of the media items stored on the mobile electronic device and computing device may be displayed on a display device of the computing device. The indicia may be a thumbnail of a picture, album art, etc. Additionally, an input selector (e.g., a checkbox) may be displayed next to the indicia to indicate whether or not the media item is currently on the mobile electronic device. The selection of media items to synchronize is based, at least in part, on the media items that are selected using the input selectors.

Additionally, the selection may comprise one or more quality preferences for syncing the one or more media items. For example, the quality preferences may include, but are not limited to, whether or not to compress the file, the quality of any compression, and whether or not to resize the file (e.g., the dimensions of a picture file).

At block 504, according to an example embodiment, sync metadata associated with media items stored on the mobile electronic device is accessed. This may be a sync index file or sync metadata file as illustrated in FIGS. 3-4. The data may be accessed by copying the files from a mobile electronic device or reading the files from the mobile electronic device. In various embodiments, after the sync metadata is accessed, the computing device has access to size information for media items, wherein the size information comprises an original size of a media item and the resized size of a media item. In an embodiment, size refers to the space taken up on a storage device (e.g., the number of kilobytes).

In an embodiment, format information for media items is retrieved, wherein the format information comprises one or more formats readable by the mobile electronic device. Because not all mobile electronic devices are the same, some media items may need to be converted/transcoded into formats readable by the mobile electronic device.

At block 506, according to an example embodiment, a set of media items to copy to the mobile electronic device is generated based on the selection, one or more quality preferences, and sync metadata, Once the computing device has access to the sync metadata, intelligent decisions may be made about which media items need to be copied to the mobile electronic device. For example, media items may be excluded from the set of media items to copy when the media item is already stored on the mobile electronic device. However, simply because a media item is already on the mobile electronic device does not necessarily mean a new version from the computing device will be not be copied.

In an embodiment, a comparison is made between a quality of a media item stored on the mobile electronic device and the quality preferences received for the synchronization. If the quality of media item that is in the selection is different than the quality of the media item as indicated in the sync metadata, than the media item may need to be copied to the mobile electronic device. This is despite the fact that a copy is already on the mobile electronic device.

In another embodiment, a comparison is made between a modified date of a media item as stored on computing device and the modified date as indicated in the sync metadata for the media item. This is assuming the media item already exists on the mobile electronic device. If the modified date on the computing device is newer than the modified date in the sync metadata then the media item needs to be copied to the mobile electronic device again. Similarly, if the checksum of the media item is different between the computing device and mobile electronic device the media item should be copied again.

In various embodiments, checks are made to see if a media item needs to be resized, compressed, or both. For example, if a user indicates that all photos should be compressed, the media sync metadata may be accessed to see which media items are already compressed. Additionally, a scenario might exist where an algorithm to compress a photo may result in a larger photo size (size on the disk) as compared to the original photo size. If this occurs, a notation may be made in the sync metadata that a compression has already been tried, but fails to reduce the file size. This notation may be retrieved so the media syncing application does not try and compress it a second time.

At block 508, according to an example embodiment, the set of media items is copied to the mobile electronic device. In various embodiments, the set of media items will be different than the media items in the selection. The set may be reduced based on the checks that occur at block 506. Commands needed to carry out the copying may be generated using a component such as command generator 220. Commands may include, but are not limited to, transcoding a media item into another format, resizing a media item, and compressing a media item.

At block 510, according to an example embodiment, the sync metadata is updated based on the set of media items copied to the mobile electronic device. In order to maintain the efficiencies of using sync metadata, the metadata is updated to include all of the changes made to the files on the mobile electronic device. For example, if a file need to be transcoded from one format to another format (e.g., TIFF to JPG) that may be included in the sync metadata. Similarly, if a previously existing media item was replaced with an updated media item, the sync metadata will be updated to include this information. In addition, if a previously existing media item does not need to be copied, an intelligent decision may be made about what metadata does not need to be copied.

A COMPUTER SYSTEM

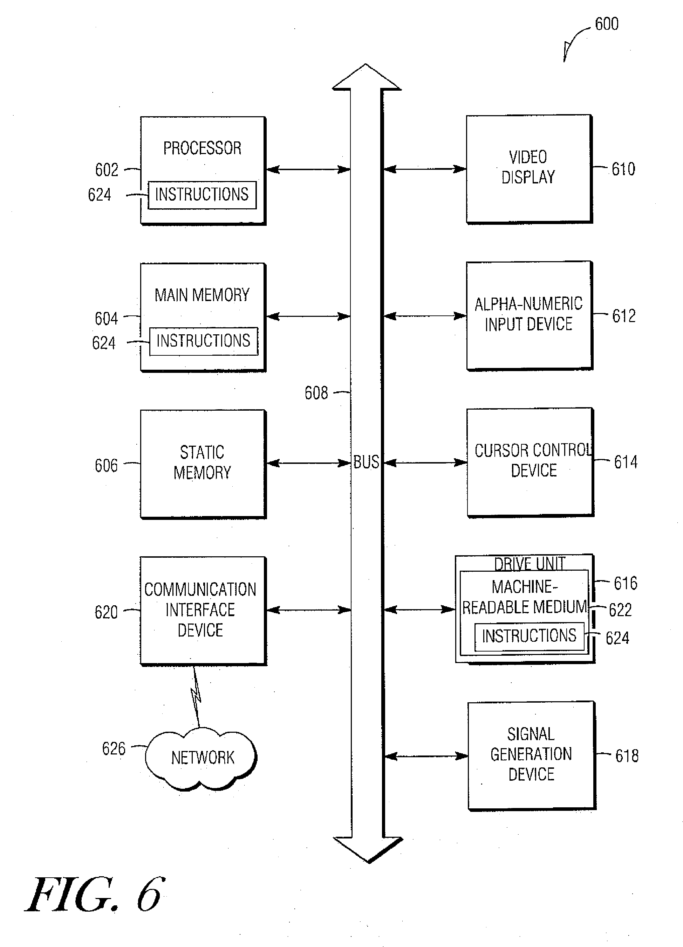

FIG. 6 shows a diagrammatic representation of a machine in the example form of a computer system 600 within which a set of instructions for causing the machine to perform any one or more of the methods, processes, operations, or methodologies discussed herein may be executed. In alternative embodiments, the machine operates as a standalone device or may be connected (e.g., networked) to other machines, In a networked deployment, the machine may operate in the capacity of a server or a client machine in server-client network environment, or as a peer machine in a peer-to-peer (or distributed) network environment. The machine may be a Personal Computer (PC), a tablet PC, a Set-Top Box (STB), a Personal Digital Assistant (PDA), a cellular telephone, a Web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Example embodiments can also be practiced in distributed system environments where local and remote computer systems that are linked (e.g., either by hardwired, wireless, or a combination of hardwired and wireless connections) through a network, both perform tasks. In a distributed system environment, program modules may be located in both local and remote memory-storage devices (see below).

The example computer system 600 includes a processor 602 (e.g., a Central Processing Unit (CPU), a Graphics Processing Unit (GPU) or both), a main memory 604 and a static memory 606, which communicate with each other via a bus 608. The computer system 600 may further include a video display unit 610 (e.g., a Liquid Crystal Display (LCD) or a Cathode Ray Tube (CRT)). The computer system 600 also includes an alphanumeric input device 612 (e.g., a keyboard), a User Interface (UI) cursor controller 614 (e.g., a mouse), a disk drive unit 616, a signal generation device 618 (e.g., a speaker) and a communication or network interface device 620 (e.g., a transmitter).

The disk drive unit 616 includes a machine-readable medium 622 that stores one or more sets of instructions 624 and data structures (e.g., software) embodying or used by any one or more of the methodologies or functions illustrated herein. The software may also reside, completely or at least partially, within the main memory 604 and/or within the processor 602 during execution thereof by the computer system 600, the main memory 604 and the processor 602 also constituting machine-readable media.

The instructions 624 may further be transmitted or received over a network 626 via the network interface device 620 using any one of a number of well-known transfer protocols (e.g., HTTP, Session Initiation Protocol (SIP)).

The term "machine-readable medium" should be taken to include a single tangible medium or multiple tangible media (e.g., a centralized or distributed database, and/or associated caches and servers) that store the one or more sets of instructions. The term "machine-readable medium" shall also be taken to include any medium that is capable of storing, encoding, or carrying a set of instructions for execution by the machine and that cause the machine to perform any of the one or more of the methodologies illustrated herein. The term "machine-readable medium" shall accordingly be taken to include, but not be limited to, solid-state memories, and optical and magnetic medium.

Method embodiments illustrated herein may be computer-implemented. Some embodiments may include computer-readable media encoded with a computer program (e.g., software), which includes instructions operable to cause an electronic device to perform methods of various embodiments. A software implementation (or computer-implemented method) may include microcode, assembly language code, or a higher-level language code, which further may include computer readable instructions for performing various methods. The code may form portions of computer program products. Further, the code may be tangibly stored on one or more volatile or non-volatile computer-readable media during execution or at other times. These computer-readable media may include, but are not limited to, hard disks, removable magnetic disks, removable optical disks (e.g., compact disks and digital video disks), magnetic cassettes, memory cards or sticks, Random Access Memories (RAMs), Read Only Memories (ROMs), and the like..

It is to be understood that the above description is intended to be illustrative, and not restrictive. For example, the above-illustrated embodiments (and/or aspects thereof) may be used in combination with each other. Many other embodiments may be apparent to those of skill in the art upon reviewing the above description. The scope of the disclosure should, therefore, be determined with reference to the appended claims, along with the full scope of equivalents to which such claims are entitled. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. A system comprising:
a computing device comprising one or more processors, a communications interface, and a storage device; (FIG. 6, elements 602, 620, and 622)
one or more computer programs executable on the one more or processors that cause the computing device to: (FIG. 6, element 624)
receive a selection of one or more media items, stored on the storage device, to synchronize with a mobile electronic device, wherein the selection comprises one or more quality preferences for syncing the one or more media items; (FIG. 5, element 502)
access sync metadata associated with media items stored on the mobile electronic device; (FIG. 5, element 504)
generate a set of media items to copy to the mobile electronic device based on the selection, one or more quality preferences, and sync metadata; (FIG. 5, element 506) and
copy, via the communications interface, the set of media items to the mobile electronic device (FIG. 5, element 508).

2. A system according to claim 1, wherein the one or more quality preferences comprises a preference of when to resize a media item.

3. A system according to claim 1, wherein the sync metadata comprises a list of the media items stored on the mobile electronic device. (FIG. 4)

4. A system according to claim 1, wherein the sync metadata comprises data identifying when an original media item should be used in place of a compressed media item. (FIG. 4)

5. A system according to claim 1, wherein the sync metadata comprises data identifying an original format of a media item.

6. A method comprising:
receiving a selection of one or more media items to synchronize with a mobile electronic device, wherein the selection comprises one or more quality preferences for syncing the one or more media items; (FIG. 5, element 502)
accessing sync metadata associated with media items stored on the mobile electronic device; (FIG. 5, element 504)
generating a set of media items to copy to the mobile electronic device based on the selection, one or more quality preferences, and sync metadata; and (FIG. 5, element 506)
copying the set of media items to the mobile electronic device. (FIG. 5, element 508)

7. A method according to claim 6, further comprising:
updating the sync metadata based on the set of media items copied to the mobile electronic device.

8. A method according to claim 6, wherein accessing sync metadata associated with the media items stored on the mobile electronic device comprises:
retrieving size information for media items, wherein the size information comprises a resized size of a media item.

9. A method according to claim 6, wherein generating a set of media items to copy to the mobile electronic device based on the selection, one or more preferences, and sync metadata includes:
excluding a media item from the set of media items to copy when the media item is already stored on the mobile electronic device.

10. A method according to claim 6, wherein generating a set of media items to copy to the mobile electronic device based on the selection, one or more quality preferences, and sync metadata includes:
comparing a quality of a media item stored on the mobile electronic device with the one or more quality preferences; and
including the media item in the set of media items to copy when the quality of the media item is different than the one or more quality preferences.

11. A method according to claim 1, wherein generating a set of media items to copy to the mobile electronic device based on the selection, one or more quality preferences, and sync metadata includes:
comparing a modified date of a media item stored on the mobile electronic device with a modified date of the media item in the selection; and
including the media item in the set of media items to copy when the modified date of the media item in the selection is newer than the modified date of the media item stored on the mobile electronic device.

12. A machine-readable medium comprising instructions, which when implemented by one or more processors perform the following operations:
receive a selection of one or more media items to synchronize with a mobile electronic device, wherein the selection comprises one or more quality preferences for syncing the one or more media items; (FIG. 5, element 502)
access sync metadata associated with media items stored on the mobile electronic device; (FIG. 5, element 504)
generate a set of media items to copy to the mobile electronic device based on the selection, one or more quality preferences, and sync metadata (FIG. 5, element 506); and
copy the set of media items to the mobile electronic device (FIG. 5, element 508).

13. A machine-readable medium according to claim 12, further comprising instructions, which when implemented by the one or more processors perform the following operation:
update the sync metadata based on the set of media items copied to the mobile electronic device.

14. A machine-readable medium according to claim 12, wherein the instructions, which when implemented by the one or more processors, perform the operation of access sync metadata associated with the media items stored on the mobile electronic device comprise instructions to perform an operation of
retrieve size information for media items, wherein the size information comprises an original size of a media item.

15. A machine-readable medium according to claim 12, wherein the instructions, which when implemented by the one or more processors, perform the operation of access sync metadata associated with the media items stored on the mobile electronic device comprise instructions to perform an operation of:
retrieve size information for media items, wherein the size information comprises an resized size of a media item.
